# EUROPÄISCHE PATENTANMELDUNG

(11) **EP 2 700 994 A1**
(43) Veröffentlichungstag der Anmeldung: **26.02.2014**
(21) Anmeldenummer: 12181333.1
(22) Anmeldetag: 22.08.2012
(51) Int. Cl.: G02C 9/02, G02C 9/04, G02C 7/06

(54) **Korrekturvorsatz für Gleitsichtbrillen**

(71) Anmelder: SUVA Schweizerische Unfallversicherungsanstalt, 6002 Luzern (CH)
(72) Erfinder: Schmitter, Dieter, 6048 Horw (CH)
(74) Vertreter: Gustorf, Gerhard

(57) **Zusammenfassung**

Der Korrekturvorsatz dient für Gleitsichtbrillen (30) mit durch einen Sattelsteg (28) miteinander verbundenen optischen Gläsern (32), die einen oberen Fernteil (38) und einen unteren Nahteil (40) haben und an denen der Korrekturvorsatz (10) mittels einer Halterung (16) fixierbar ist. Dabei ist vorgesehen, dass die Halterung (16) aus einem Schwenkmechanismus (36) mit horizontaler Scharnierachse (34) besteht, der im Bereich des Sattelstegs (28) auf die Gleitsichtbrille (30) aufsteckbar ist und zwei Kurzdistanz-Korrekturgläser (12) hat, deren Größe dem oberen Fernteil (38) entspricht, vor den sie schwenkbar sind.

## Beschreibung

Die Erfindung betrifft einen Korrekturvorsatz für Gleitsichtbrillen nach dem Oberbegriff des Patentanspruchs 1.

Aus dem deutschen Gebrauchsmuster DE 297 09 477 U1 ist eine Vorsatzeinrichtung für Brillengläser bekannt, die als zusätzliche Sehhilfe mit Vergrößerungseffekt vor die optischen Gläser der bestehenden Brille geschoben werden kann.

Eine ähnliche Einrichtung ist aus DE 10 2006 001 395 A1 bekannt. In dieser ist ein Korrekturvorsatz zur Aberrationskorrektur von Brillengläsern beschrieben und dargestellt, der eine zusätzliche Korrektur der bestehenden Brillengläser in abgedunkelter Umgebung ermöglichen soll und dessen Korrekturgläser ganzflächig vor die bestehenden Brillengläser gesetzt werden.

Handwerker, die wegen Altersweitsichtigkeit eine Gleitsichtbrille tragen, haben in der Regel Sehprobleme, sobald sie Arbeiten über Brusthöhe ausführen müssen. Dies gilt sowohl für Arbeiten im Stehen als auch im Knien oder Sitzen. Beim Arbeiten mit den Händen liegen die Sehdistanzen meistens zwischen 30 und 60 cm. Auf diese Distanz können Altersweitsichtige nur durch den Nahteil der Gleitsichtbrille scharf sehen, der im unteren Bereich, dem Leseteil, der optischen Gläser liegt. Das bedeutet, dass sie bei höher gelegenen Arbeitspunkten den Kopf in den Nacken ziehen müssen; je höher der Arbeitspunkt liegt, desto stärker muss der Kopf nach hinten gezogen werden.

Viele Handwerker, die regelmäßig oder länger in einer solchen Haltung arbeiten müssen, klagen über Nacken- oder Schulterverspannungen und Schmerzen. Stark betroffen sind Mechaniker, Elektriker, Monteure, Sanitärinstallteure, Küchenbauer und Personen, die Kontrollen, Montagearbeiten oder Reparaturen unter Fahrzeugen ausführen müssen.

Der Erfindung liegt die Aufgabe zugrunde, hier Abhilfe zu schaffen und einen Korrekturvorsatz für Gleitsichtbrillen zur Verfügung zu stellen, der bei Arbeiten über Brust- oder Kopfhöhe ein scharfes Bild erzeugt, ohne dass dabei der Kopf nach hinten gezogen werden muss.

Zur Lösung dieser Aufgabe ist bei einem Korrekturvorsatz der angegebenen Gattung diese Aufgabe dadurch gelöst, dass die Halterung für den Korrekturvorsatz aus einem Schwenkmechanismus mit horizontaler Schwenkachse besteht, der im Bereich des Sattelsteges auf die Gleitsichtbrille aufgesteckt werden kann und zwei Kurzdistanz-Korrekturgläser hat, deren Größe dem oberen Fernteil der Gleitsichtbrille entspricht, vor den sie geschwenkt werden können.

Der Korrekturvorsatz gemäß der Erfindung erlaubt eine schmale Kurzdistanz-Korrektur auch im oberen Fernteil der optischen Gläser der Gleitsichtbrille; der untere Nahteil bleibt frei. Die Halterung des Korrekturvorsatzes wird lediglich oben auf die Gleitsichtbrille gesteckt. Bei Arbeiten über Brust- oder Kopfhöhe können dann die beiden Kurzdistanz-Korrekturgläser vor den oberen Fernteil der optischen Gläser geschwenkt werden, so dass Arbeitspunkte in Greifdistanz gestochen scharf gesehen werden, ohne dass dabei der Kopf stark nach hinten gezogen werden muss. Wenn sich der Arbeiter von der Arbeitsstelle entfernt und wieder auf größere Distanz gut sehen muss, klappt er die beiden fest miteinander verbundenen Korrekturgläser wieder in eine Wartestellung.

Es ist von besonderem Vorteil, wenn in Weiterbildung der Erfindung der Schwenkmechanismus ein mindestens bistabiles Kippscharnier hat, das die Korrekturgläser in einer senkrechten Einsatzstellung und in einer waagrechten und/oder einer nach oben ausgeschwenkten Wartestellung hält.

Die Brechkraft der Korrekturgläser liegt nach einem weitem Merkmal der Erfindung im Bereich zwischen 1 und 2,5 Dioptrien.

Die Erfindung ist nachstehend an einem Ausführungsbeispiel erläutert, das in der Zeichnung dargestellt ist. In dieser zeigen:
- Figur 1: die Ansicht eines Korrekturvorsatzes gemäß der Erfindung,
- Figur 2: eine herkömmliche Gleitsichtbrille mit in Wartestellung aufgestecktem Korrekturvorsatz,
- Figur 3: die Gleitsichtbrille der Figur 2 mit Korrekturvorsatz in Einsatzstellung,
- Figur 4: die Darstellung eines Arbeiters bei Arbeiten über Kopf mit ausgeschwenktem Korrekturvorsatz in Wartestellung, d. h. der Arbeiter arbeitet ohne Korrekturvorsatz, und
- Figur 5: die Situation der Figur 4, jedoch mit Korrekturvorsatz in Einsatzstellung.

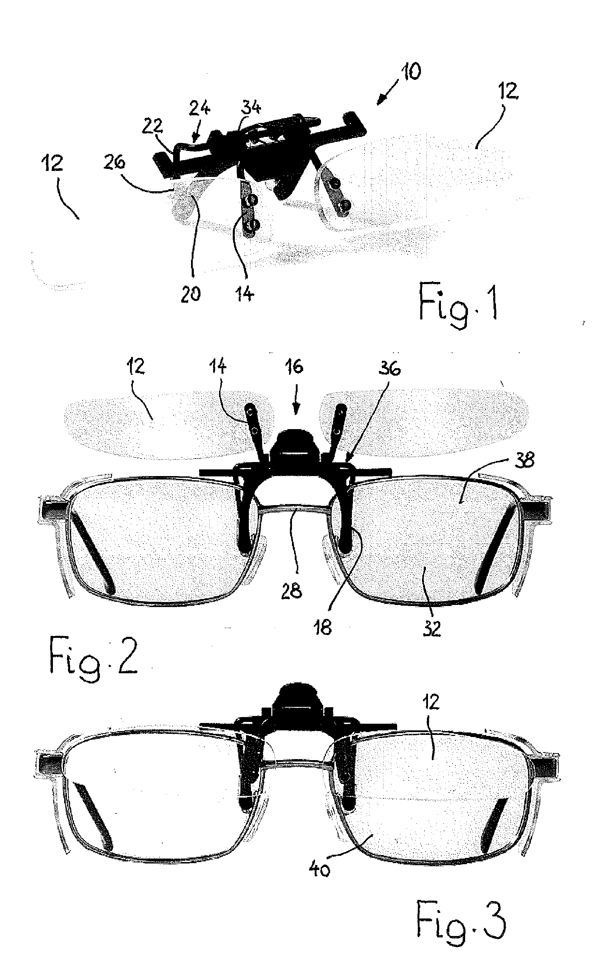

Die Figuren 1 bis 3 zeigen einen Korrekturvorsatz 10 gemäß der Erfindung, der mit zwei schmalen Kurzdistanz-Korrekturgläsern 12 bestückt ist, die an zwei Halteleisten 14 befestigt sind. Die Halteleisten 14 sind Teil einer insgesamten mit 16 bezeichneten Halterung, die aus einem zweiarmigen Bügel 18 in Form eines kopfstehenden U besteht, wobei jedem Arm 20 des Bügels 18 ein elastischer Arm 22 einer U-Feder 24 zugeordnet ist, dessen freies Ende 26 ein weichelastisches Polster trägt.

Wie die Figuren 2 und 3 zeigen, kann diese Halterung 16 im Bereich des Sattelsteges 28 einer Gleitsichtbrille 30 auf deren optische Gläser 32 aufgesteckt werden. Die weichelastisch gepolsterten Enden 26 der Federarme 22 sowie die ebenfalls mit einem schonenden Überzug versehenen Arme 20 des Bügels 18 verhindern dabei ein Verkratzen der Gläser 32.

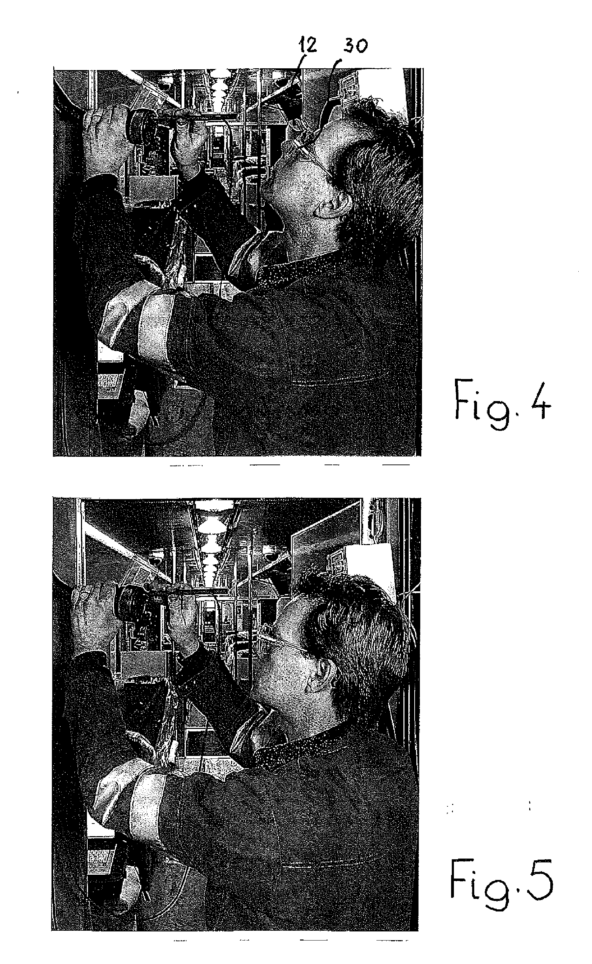

Die beiden Halteleisten 14 des Korrekturvorsatzes 10 sind über eine horizontale Scharnierachse 34 miteinander verbunden, die in der Halterung 16 schwenkbar gelagert ist. Die Scharnierachse 34 ist dabei Teil eines Schwenkmechanismus 36, der ein mindestens bistabiles Kippscharnier hat, das die Korrekturgläser 12 des Korrekturvorsatzes 10 in einer senkrechten Einsatzstellung gemäß Figur 3 sowie in einer Wartestellung gemäß den Figuren 2 und 4 hält. Die Wartestellung kann dabei, wie in Figur 4 gezeigt, etwa waagrecht ausgerichtet sein, sie kann aber auch, wie in Figur 2 gezeigt, nach oben ausgeschwenkt sein.

Vor allem aus Figur 3 wird deutlich, dass die beiden Korrekturgläser 12 eine Größe haben, die nur dem oberen Fernteil 38 der optischen Gläser 32 der Gleitsichtbrille 30 entsprechend, so dass in der eingeschwenkten Einsatzstellung gemäß Figur 3 der untere Nahteil 40 der optischen Gläser 32 der Gleitsichtbrille 30 frei bleibt.

Die Figuren 4 und 5 zeigen deutlich die vorteilhafte Wirkung des Korrekturvorsatzes 10, der in seiner etwa senkrecht nach unten geschwenkten Einsatzstellung der Korrekturgläser 12 (vgl. auch Figur 3) eine scharfe Sicht auf Arbeitspunkte über Brust- oder Kopfhöhe gestattet, ohne dass - wie in Figur 4 ersichtlich - der Kopf nach hinten gezogen werden muss. Schmerzen und Verspannungen, insbesondere im Nackenbereich, werden dadurch wirksam verhindert.

## Patentansprüche

1. Korrekturvorsatz für Gleitsichtbrillen (30) mit durch einen Sattelsteg (28) miteinander verbundenen optischen Gläsern (32), die einen oberen Fernteil (38) und einen unteren Nahteil (40) haben und an denen der Korrekturvorsatz (10) mittels einer Halterung (16) fixierbar ist, **dadurch gekennzeichnet, dass** die Halterung (16) aus einem Schwenkmechanismus (36) mit horizontaler Scharnierachse (34) besteht, der im Bereich des Sattelstegs (28) auf die Gleitsichtbrille (30) aufsteckbar ist und zwei Kurzdistanz-Korrekturgläser (12) hat, deren Größe dem oberen Fernteil (38) entspricht, vor den sie schwenkbar sind.

2. Korrekturvorsatz nach Anspruch 1, **dadurch gekennzeichnet, dass** der Schwenkmechanismus (36) ein mindestens bistabiles Kippscharnier aufweist, das die Korrekturgläser (12) in einer senkrechten Einsatzstellung und in einer waagrechten und/oder einer nach oben ausgeschwenkten Wartestellung hält.

3. Korrekturvorsatz nach Anspruch 1 oder 2, **dadurch gekennzeichnet, dass** die Brechkraft der Korrekturgläser im Bereich zwischen 1 und 2,5 Dioptrien liegt.
